# EUROPEAN PATENT SPECIFICATION

(11) **EP 3 405 021 B1**
(45) Date of publication and mention of the grant of the patent: **30.12.2020**
(21) Application number: 16869308.3
(22) Date of filing: 23.11.2016
(51) Int. Cl.: A01G 7/02, A01G 31/04

(54) **PLANT GROWING SYSTEMS AND METHODS**
PFLANZENWACHSTUMSSYSTEME UND -VERFAHREN
SYSTÈMES ET PROCÉDÉS DE CULTURE DE PLANTE

(30) Priority: 23.11.2015 US 201562259002 P
(43) Date of publication of application: 28.11.2018
(73) Proprietor: Local Urban Vegetables, LLLP, Beverly Hills, California 90212 (US)
(72) Inventor: GASMER, Morris, Beverly Hills, CA 90212 (US); BOERMA, Martin, Beverly Hills, CA 90212 (US); IUNGERICH, Jonathan, Beverly Hills, CA 90212 (US); DOHRMAN, Steve, Beverly Hills, CA 90212 (US)
(74) Representative: Derry, Paul Stefan
(86) International application number: PCT/US2016/063675
(87) International publication number: WO 2017/091772

(56) References cited:
- EP-A1- 2 335 473
- WO-A1-00/44220
- US-A- 5 038 517
- US-A- 5 511 340
- US-A1- 2006 156 624
- US-A1- 2011 219 689
- US-A1- 2011 225 883
- US-A1- 2012 279 120
- US-A1- 2014 075 840
- US-A1- 2014 144 079
- US-A1- 2014 165 468
- US-B1- 8 966 819
- US-B2- 9 131 646

## Description

### CROSS-REFERENCE TO RELATED APPLICATION

The present application claims priority to U.S. Provisional Application No. 62/259,002, entitled "Indoor Farming Systems and Method," filed on November 23, 2015,

### FIELD OF THE INVENTION

This invention relates generally to plant growing systems and methods, and more particularly, to container-based indoor farming systems and methods.

### BACKGROUND

Traditional agricultural methods are labor and land intensive and dependent on local climate and weather conditions. Various indoor farming technologies have been developed to address these issues and to produce higher yields in controlled environments. Document US-A-2014165468 discloses a plant growing system.

Unfortunately, current indoor farming systems come with their own limitations. For example, existing aeroponic systems are labor intensive and are not easily automated. In addition, the dense growing environments created by some indoor farming systems can create a stagnant micro-climate under the plant canopy that is susceptible to mold and mildew. Technologies to support aeroponic systems can also be complex, expensive, and difficult to maintain and clean.

It should be appreciated that there is a need for a scalable, automated indoor farming system having component parts that are easily maintained and cleaned. The improved indoor farming system should provide a healthier and more efficient growing environment, and generate a higher crop yield at a lower energy cost. The present invention fulfills these needs and provides further related advantages.

### BRIEF SUMMARY OF THE INVENTION

The present invention is embodied in a plant growing system comprising a roller assembly for rolling engagement with an upper track, a support member, a first growing panel, a second growing panel, and a supply tube. The support member is coupled to the roller assembly and has a first side, in which an indentation is formed, and a second side opposite the first side. The first growing panel is suspended from the first side of the support member and the second growing panel is suspended from the second side of the support member. The supply tube is supported by the support member. Additionally or alternatively, the supply tube is supported by three supply tube openings in a lower portion of the first growing panel or the second growing panel. Each of the first and second growing panels comprises a growing wall having a plurality of openings for receiving a plurality of plant receptacles, and a sidewall extending about at least a portion of a periphery of the growing wall. The sidewall of the first growing panel and the sidewall of the second growing panel abut each other to define an enclosure between the growing wall of the first growing panel and the growing wall of the second growing panel. The supply tube comprises a connection tube extending along an upper face of the support member, and a vertical tube coupled to the connection tube. The vertical tube extends through the indentation formed in the first side of the support member into the enclosure.

In one embodiment, the roller assembly further comprises a vertical arm coupled to the support member, wherein the vertical arm extends through an opening in the abutted first and second peripheral sidewalls. In another embodiment, the support member extends substantially across a depth of the enclosure. In a further embodiment, the first side of the support member further comprises a flange. In an additional embodiment, a lower portion of the growing wall of at least one of the first growing panel and the second growing panel further comprises a supply tube opening, wherein the vertical tube is removably coupled to the supply tube opening.

In one embodiment, the vertical tube comprises a spray nozzle. In another embodiment, the supply tube comprises three vertical tubes comprising: a first input tube, a second input tube, and an output tube that can be placed in between the first input tube and the second input tube. In another embodiment, three indentations are formed on the first side of the support member, the three indentations comprising a first indentation, a second indentation, and a third indentation, wherein the first input tube extends through the first indentation, the output tube extends through the second indentation, and the second input tube extends through the third indentation. In a further embodiment, the lower portion of the growing wall of at least the first growing panel and the second growing panel comprises three supply tube openings, the three supply tube openings comprising a first supply tube opening removably coupled to the first input tube, a second supply tube opening removably coupled to the second input tube, and a third supply tube opening removably coupled to the output tube.

In one embodiment, the supply tube is in fluid communication with a water supply outside the enclosure. In another embodiment, each of the plurality of openings in the growing wall is surrounded by a wall receptacle having its own opening, wherein the opening of the wall receptacle defines an axis that is oblique to the growing wall. In a further embodiment, the wall receptacle further comprises a bottom portion having a substantially planar lip.

The present invention is also embodied in a method of removing the supply tube from the plant growing system described above. The method comprises the steps of lifting the first growing panel off of the first side of the support member, disconnecting the vertical tube from the supply tube opening or a union piece attached to the supply tube opening, and lifting the supply tube off of the upper face of the support member.

The present invention is also embodied in a method of removing a supply tube from a plant growing system. The plant growing system comprises a support member, a first growing panel, a second growing panel, and a supply tube. The support member has a first side, in which an indentation is formed, and a second side opposite the first side. The first growing panel is suspended from the first side of the support member and the second growing panel is suspended from the second side of the support member. The supply tube is supported by the support member. Additionally or alternatively, the supply tube is supported by three supply tube openings in a lower portion of the first growing panel or the second growing panel. Each of the first and second growing panels comprises a growing wall having a plurality of openings for receiving a plurality of plant receptacles, and a sidewall extending about at least a portion of a periphery of the growing wall. The sidewall of the first growing panel and the sidewall of the second growing panel abut each other to define an enclosure between the growing wall of the first growing panel and the growing wall of the second growing panel. The supply tube comprises a connection tube extending along an upper face of the support member, and a vertical tube coupled to the connection tube. The vertical tube extends through the indentation formed in the first side of the support member into the enclosure. The vertical tube is removably coupled to a supply tube opening in a lower portion of the growing wall of at least one of the first growing panel and the second growing panel. The method comprises the steps of lifting the first growing panel off of the first side of the support member, disconnecting the vertical tube from the supply tube opening, and lifting the supply tube off of the upper face of the support member.

The present invention is also embodied in a plant growing system comprising a growing panel and a porous air hose coupled to the growing panel. The growing panel includes a plurality of openings for receiving a plurality of plant receptacles. The plurality of openings are arranged in a plurality of parallel lines on the growing panel, and the porous air hose extends along the growing panel between at least two of the parallel lines. In one embodiment, the plurality of parallel lines are rows. In another embodiment, the plurality of parallel lines are columns.

In one embodiment, the porous air hose has a porosity of about 1.5 to about 2 CFM/ft² at a static pressure of about 0.5 inch water column. In a further embodiment, the porous air hose comprises a polyester fabric. In another embodiment, the polyester fabric comprises an active antimicrobial treatment.

In one embodiment, the plant growing system further comprises an air amplifier in air communication with the porous air hose. In another embodiment, the plant growing system further comprises an air pump in air communication with the air amplifier. In a further embodiment, the plant growing system further comprises an air source in air communication with the air pump. In an additional embodiment, the air source comprises a source of CO₂.

In one embodiment, the plant growing system further comprises a plurality of plant receptacles in the plurality of openings. In another embodiment, the plant growing system further comprises a plurality of plants in the plurality of plant receptacles. In a further embodiment, the plurality of plants define a plant canopy substantially above the porous air hose.

A method of refreshing a microclimate under a plant canopy, not according to the invention, comprises the steps of arranging a plurality of plant receptacles on a growing panel in a plurality of parallel lines, and coupling a porous air hose to the growing panel so that the porous air hose extends along the growing panel between at least two of the parallel lines. The method further comprises the steps of growing plants in the plurality of plant receptacles, wherein the plants define the plant canopy substantially above the porous air hose, and pumping a volume of air through the porous air hose

In one embodiment, not according to the invention, the at least two parallel vectors are rows. In another embodiment, not according to the invention, the at least two parallel vectors are columns. In a further embodiment, not according to the invention, the method further comprises the step of amplifying the volume of air that is pumped through the porous air hose. In an additional embodiment, not according to the invention, the air comprises CO₂.

A plant receptacle not according to the invention, comprises a gripping collar, a receptacle portion, and a canopy portion. The gripping collar is oriented along an axis and defines an opening for receiving a horticultural plug. The receptacle portion is connected at a proximal end to the gripping collar and defines a first recess extending along the axis in communication with the opening of the gripping collar. The receptacle portion is connected to the gripping collar so that a distal end of the gripping collar forms a first flange about at least a portion of the proximal end of the receptacle portion. The canopy portion is connected at a proximal end to the receptacle portion and defines a second recess extending along the axis in communication with the first recess. The proximal end of the canopy portion has a cross-sectional area that is less than a cross sectional area of a distal end of the receptacle portion; and a top section of the canopy portion extends along the axis a greater distance than a bottom section of the canopy portion.

In one embodiment, not according to the invention, the plant receptacle comprises a polymer material. In another embodiment, not according to the invention, the receptacle portion is substantially cylindrical or polygonal. In a further embodiment, not according to the invention, the canopy portion defines a hollow truncated cylinder or a hollow truncated prism. In an additional embodiment, not according to the invention, the distal end of the receptacle portion comprises an annulus within the first recess.

In one embodiment, not according to the invention, the gripping collar further comprises a second flange and a sidewall extending between and coupled to the first and second flanges. In another embodiment, not according to the invention, the sidewall is polygonal. In a further embodiment, not according to the invention, the first flange comprises a substantially planar edge that is contralateral to the canopy portion's top section.

In one embodiment, not according to the invention, the plant receptacle further comprises a retaining tongue on the receptacle portion. In another embodiment, not according to the invention, the retaining tongue is defined by a U-shaped cut through the receptacle portion. In a further embodiment, not according to the invention, the retaining tongue comprises a detent.

A method of growing a plant, not according to the invention, comprises the steps of providing a plant receptacle having the plant growing in a horticultural plug. The plant receptacle comprises a gripping collar, a receptacle portion, and a canopy portion. The gripping collar is oriented along an axis and defines an opening for receiving a horticultural plug. The receptacle portion is connected at a proximal end to the gripping collar and defines a first recess extending along the axis in communication with the opening of the gripping collar. The receptacle portion is connected to the gripping collar so that a distal end of the gripping collar forms a first flange about at least a portion of the proximal end of the receptacle portion. The canopy portion is connected at a proximal end to the receptacle portion and defines a second recess extending along the axis in communication with the first recess. The proximal end of the canopy portion has a cross-sectional area that is less than a cross sectional area of a distal end of the receptacle portion; and a top section of the canopy portion extends along the axis a greater distance than a bottom section of the canopy portion. The first flange of the gripping collar comprises a substantially planar edge that is contralateral to the top section of the canopy portion. A root of the plant extends to the second recess of the plant receptacle's canopy portion.

The method not according to the invention, comprises the step of placing the plant receptacle into an opening on a growing wall such that the canopy portion of the plant receptacle extends into an enclosure within the growing wall. The opening on the growing wall is surrounded by a wall receptacle having its own opening. The opening of the wall receptacle defines an axis that is oblique to the growing wall. The wall receptacle further comprises a bottom portion having a substantially planar lip. The method further comprises the step of orienting the plant receptacle on the growing wall so that the substantially planar edge on the plant receptacle engages the substantially planar lip on the bottom portion of the wall receptacle. So positioned, the top section of the canopy portion will extend above the root of the plant.

In one embodiment, not according to the invention, the method further comprises the step of spraying a mist within the enclosure. In another embodiment, not according to the invention, the top section of the canopy portion protects the root of the plant from contact with droplets formed above the root. In a further embodiment, not according to the invention, the steps of placing the plant receptacle into an opening and orienting the plant receptacle on the grow wall are performed by an automated arm.

Other features and advantages of the invention should become apparent from the following description of the preferred embodiments, taken in conjunction with the accompanying drawings, which illustrate, by way of example, the principles of the invention.

### BRIEF DESCRIPTION OF THE DRAWINGS

Figure 1 is a perspective view of an indoor farming system, in accordance with one embodiment of the present invention.
Figure 2 is a front perspective view of a segmented plant growing system, in accordance with one embodiment of the present invention.
Figure 3A is a rear perspective view of a plant growing system, in accordance with one embodiment of the present invention.
Figure 3B is a front perspective view of a plant growing system, in accordance with one embodiment of the present invention.
Figure 4 is a front perspective cut-away view of a plant growing system, in accordance with one embodiment of the present invention.
Figure 5 is a front perspective view of a plant growing system with one growing panel removed, in accordance with one embodiment of the present invention.
Figure 6 is a front perspective view of a support member for a plant growing system, in accordance with one embodiment of the present invention.
Figure 7 is a front perspective view of a support member and a supply tube for a plant growing system, in accordance with one embodiment of the present invention.
Figure 8A is a front perspective view of an upper portion of a growing panel, in accordance with one embodiment of the present invention.
Figure 8B is a front perspective view of the upper portions of abutting growing panels, in accordance with one embodiment of the present invention.
Figure 9 is a top view of a plant growing system with the upper portions cut away to show the support member and supply tube, in accordance with one embodiment of the present invention.
Figure 10 is a front perspective view of a plant growing system having a porous air tube, in accordance with one embodiment of the present invention.
Figure 11 is a bottom perspective view of a plant growing system having a porous air tube under a plant canopy, in accordance with one embodiment of the present invention.
Figure 12 is a side elevational view of a plant receptacle, in accordance with one embodiment of the present invention.
Figure 13 is a cross-sectional side view of a plant receptacle, not in accordance with one embodiment of the present invention.
Figure 14 is a top perspective view of a plant receptacle, not in accordance with one embodiment of the present invention.
Figure 15 is a bottom perspective view of a plant receptacle, not in accordance with one embodiment of the present invention.
Figures 16A and 16B are perspective views of a plant receptacle and a wall receptacle, not in accordance with one embodiment of the present invention.
Figure 17 is a side cut-away view of a plant growing system showing a plant receptacle, a wall receptacle, and a supply tube, not in accordance with one embodiment of the present invention.
Figure 18 is a perspective view of plant receptacles and a multi-tool, not in accordance with one embodiment of the present invention.

### DETAILED DESCRIPTION OF THE PREFERRED EMBODIMENTS

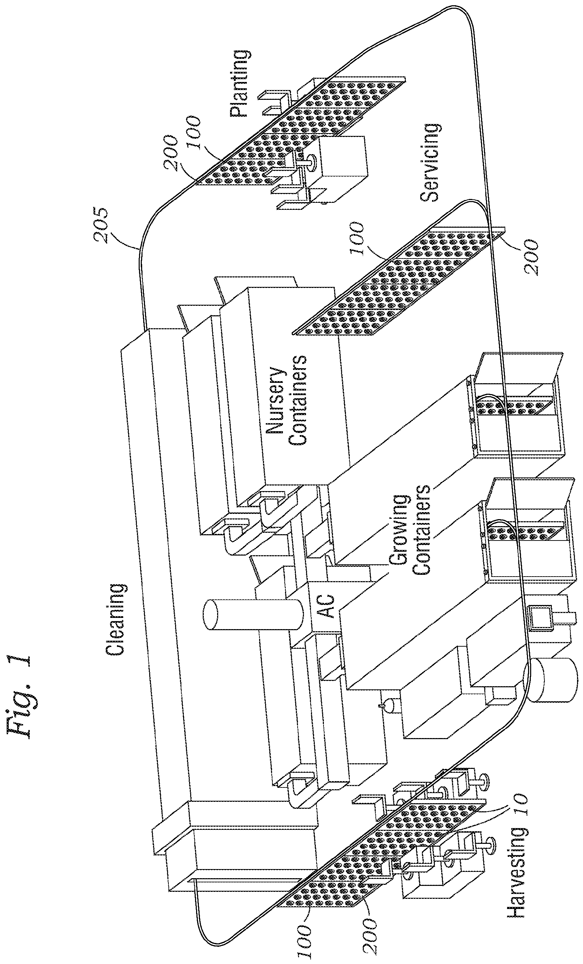

With reference now to Figure 1 of the illustrative drawings, there is shown various technologies relating to automated indoor farming systems and methods, including an embodiment of a plant growing system 200 having a plurality of plant receptacles 100. In general, the plant receptacle 100 can be used to support a plant 10 throughout its lifecycle and, together with the plant growing system 200, facilitate the automated movement of the plant 10 throughout the indoor farming system.

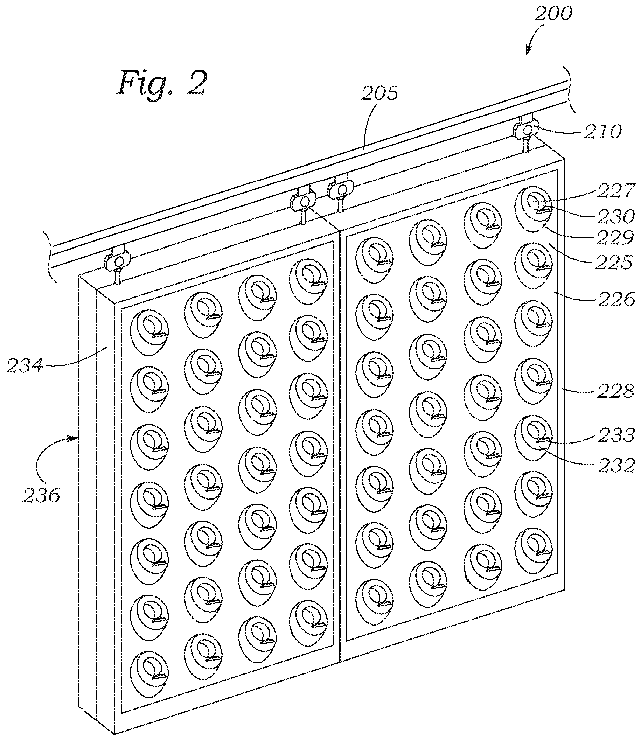

With reference now to Figure 2 of the illustrative drawings, there is shown two segmented plant growing systems 200. Each plant growing system 200 comprises a roller assembly 210 for rolling engagement with an upper track 205, a first growing panel 225, and a second growing panel 236. Each of the first and second growing panels 225, 236 comprises a growing wall 226 having a plurality of openings 227 and a sidewall 234 extending about at least a portion of a periphery 228 of the growing wall 226.

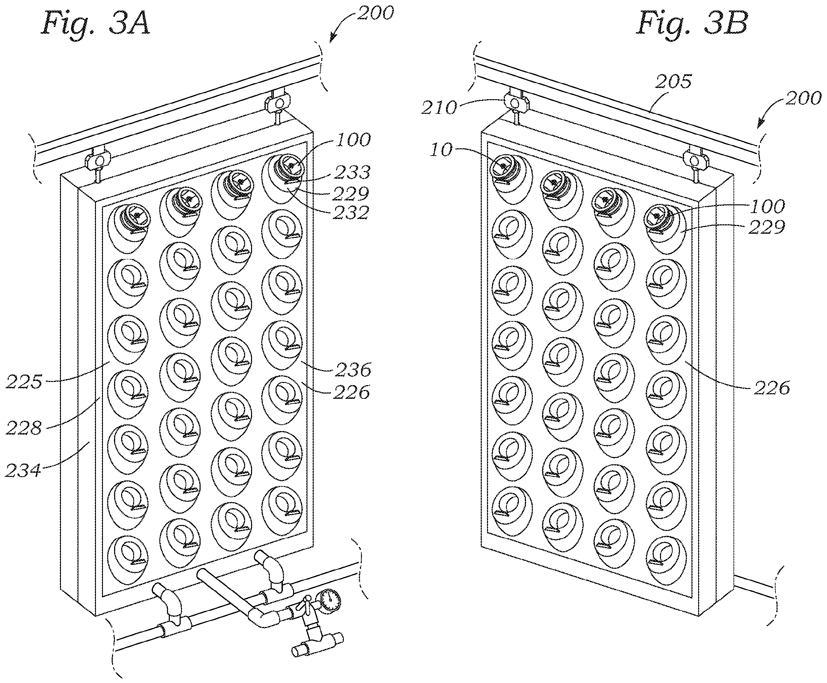

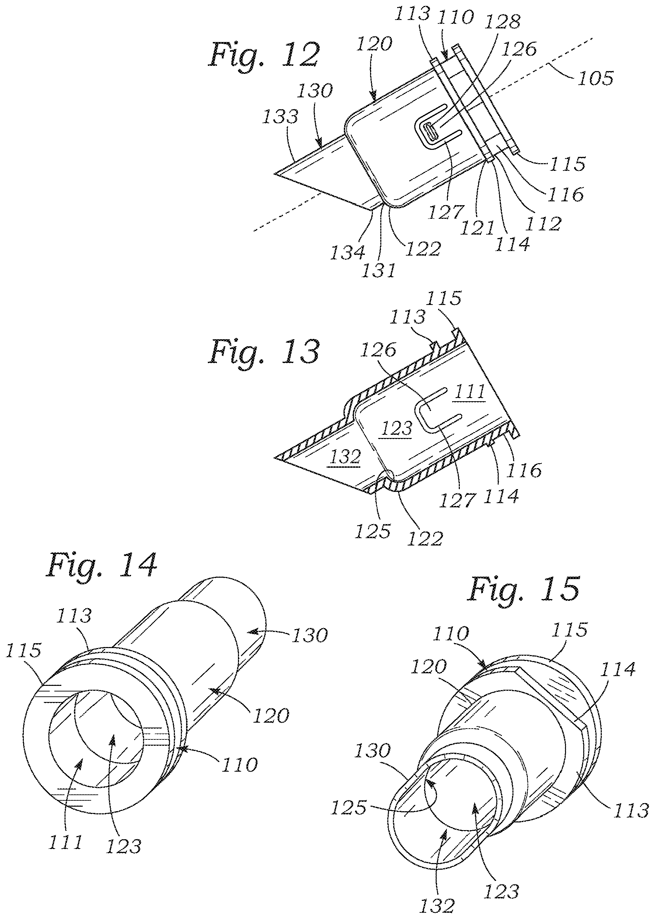

With reference to Figures 3A and 3B, each of the plurality of openings 227 in the growing wall 226 is configured to receive a plurality of plant receptacles 100. In one embodiment, each of the plurality of openings 227 in the growing wall 226 is surrounded by a wall receptacle 229 having its own opening 230, wherein the opening 230 of the wall receptacle 229 defines an axis 231 (Figure 12A) that is oblique to the growing wall 226. In a further embodiment, the wall receptacle 229 further comprises a bottom portion 232 having a substantially planar lip 233. As will be discussed in more detail below, the substantially planar lip 233 can engage a portion of a plant receptacle 100 so as to ensure the proper orientation of the plant receptacle 100 on the growing wall 226.

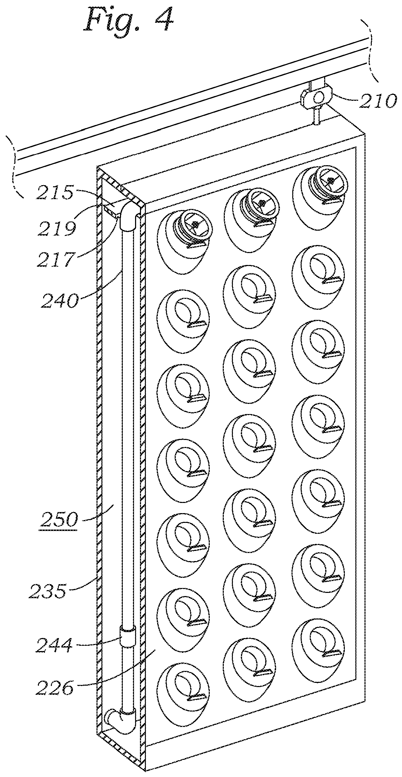

With reference to Figures 4-7, the plant growing system 200 further comprises a support member 215 and a supply tube 240. The support member 215 is coupled to the roller assembly 210 and has a first side 216, in which an indentation 217 is formed, and a second side 219 opposite the first side 216. The first growing panel 225 is suspended from the first side 216 of the support member 215 and the second growing panel 236 is suspended from the second side 219 of the support member 215. The supply tube 240 is supported by the support member 215. The sidewall 234 of the first growing panel 225 and the sidewall 234 of the second growing panel 236 abut each other to define an enclosure 250 between the growing wall 226 of the first growing panel 225 and the growing wall 226 of the second growing panel 235. In one embodiment, the sidewall 234 of the first growing panel 225 and the sidewall 234 of the second growing panel 236 can further include an outwardly extending flange (not shown), which can facilitate connecting multiple plant growing systems 200 together.

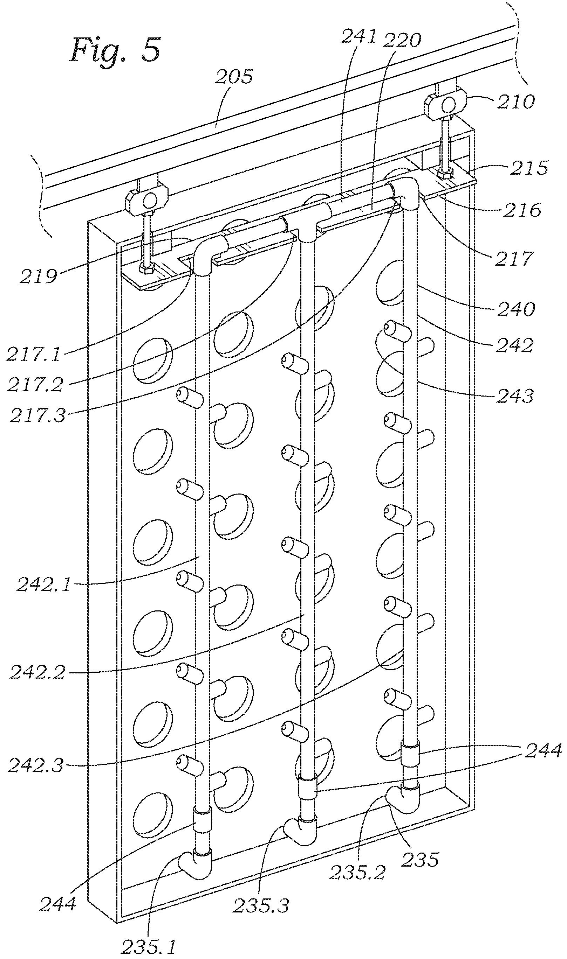

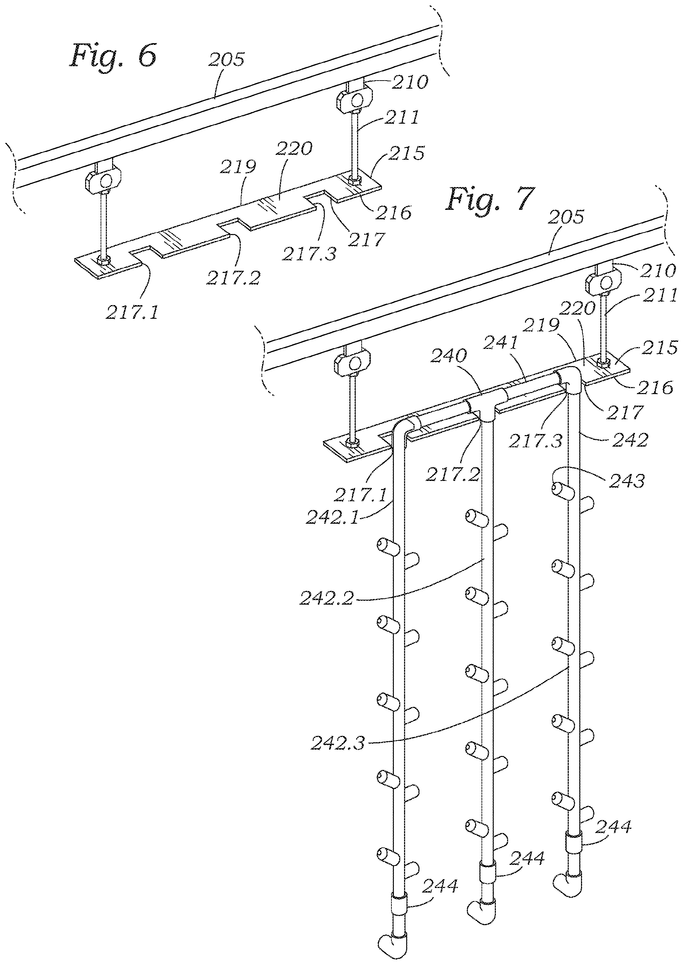

With particular reference to Figures 5 and 7, the supply tube 240 comprises a connection tube 241 extending along an upper face 220 of the support member 215, and a vertical tube 242 coupled to the connection tube 241. The vertical tube 242 extends through the indentation 217 formed in the first side 216 of the support member 215 into the enclosure 250. In one embodiment, a lower portion of the growing wall 226 of at least one of the first growing panel 225 and the second growing panel 236 further comprises a supply tube opening 235, wherein the vertical tube 242 is removably coupled to the supply tube opening 235. In one embodiment, the vertical tube 242 comprises a connection union 244, which allows the vertical tube 242 to be quickly coupled to and decoupled from the supply tube opening 235.

With continued reference to Figures 5 and 7, in one embodiment, the vertical tube 242 comprises a spray nozzle 243. In another embodiment, the spray nozzle 243 is a fogger. In a further embodiment, the supply tube 240 comprises three vertical tubes comprising: a first input tube 242.1, a second input tube 242.2, and an output tube 242.3. In an additional embodiment, three indentations 217 are formed on the first side of the support member, the three indentations comprising a first indentation 217.1, a second indentation 217.2, and a third indentation 217.3, wherein the first input tube 242.1 extends through the first indentation 217.1, the output tube 242.3 extends through the second indentation 217.2, and the second input tube 242.2 extends through the third indentation 217.3.

In one embodiment, the lower portion of the growing wall 226 of at least the first growing panel 225 and the second growing panel 236 comprises three supply tube openings 235, the three supply tube openings comprising a first supply tube opening 235.1 removably coupled to the first input tube 242.1, a second supply tube opening 235.2 removably coupled to the second input tube 242.2, and a third supply tube opening 235.3 removably coupled to the output tube 242.3. In another embodiment, the supply tube 240 is in fluid communication with a water supply (not shown) outside the enclosure 250.

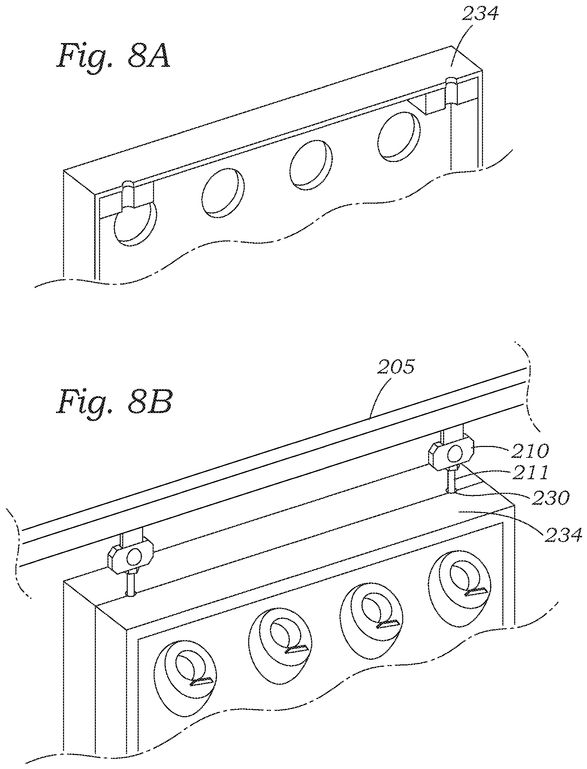

With reference to Figures 8A and 8B, in one embodiment, the roller assembly 210 further comprises a vertical arm 211 coupled to the support member 215, wherein the vertical arm 211 extends through an opening 230 in the abutted first and second peripheral sidewalls 234.

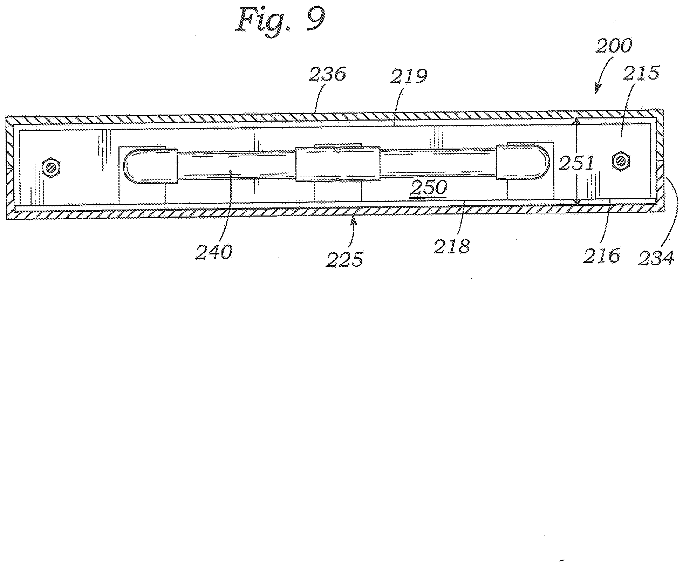

With reference to Figure 9, in another embodiment, the support member 215 extends substantially across a depth 251 of the enclosure 250. In a further embodiment, the first side 216 of the support member 215 further comprises a flange 218. In this way, support member 215 can support the supply tube 240 within the enclosure 250 without fastening the supply tube 240 to the support member 215 or any other structure.

In use, the plant growing system 200 can provide an aeroponic system for growing plants in an air or mist environment without the use of soil or an aggregate medium. The plant growing system 200 facilitates easy removal of the supply tube 240 for maintenance, cleaning, or replacement. For example, in one embodiment, a method of removing the supply tube 240 from the plant growing system 200 described above comprises the steps of lifting one of the growing panels 225, 236 off of the support member 215, disconnecting the vertical tube 242 from the supply tube opening 235, and lifting the supply tube 240 off of the upper face 220 of the support member 215. In a further embodiment, the vertical tube 242 comprises a connection union 244, which allows the vertical tube 242 to be quickly decoupled from the supply tube opening 235.

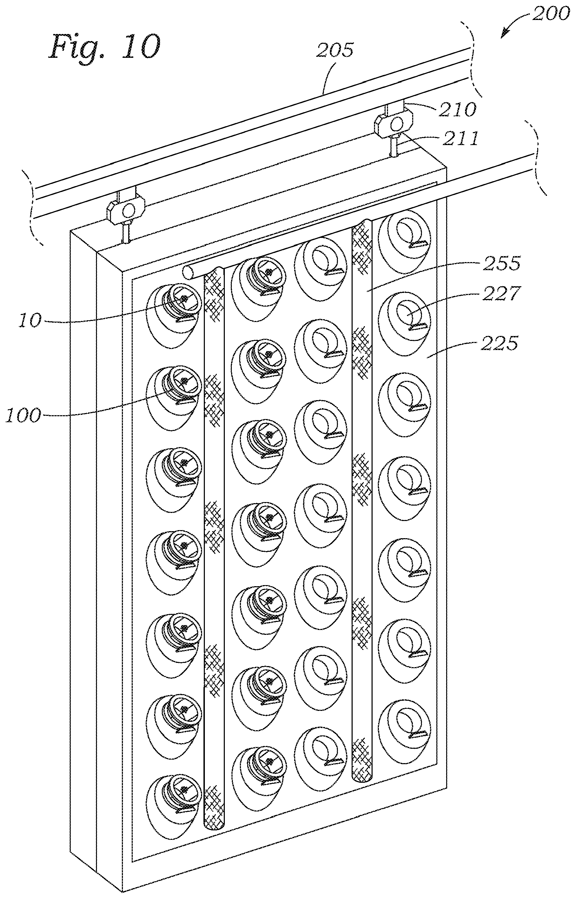

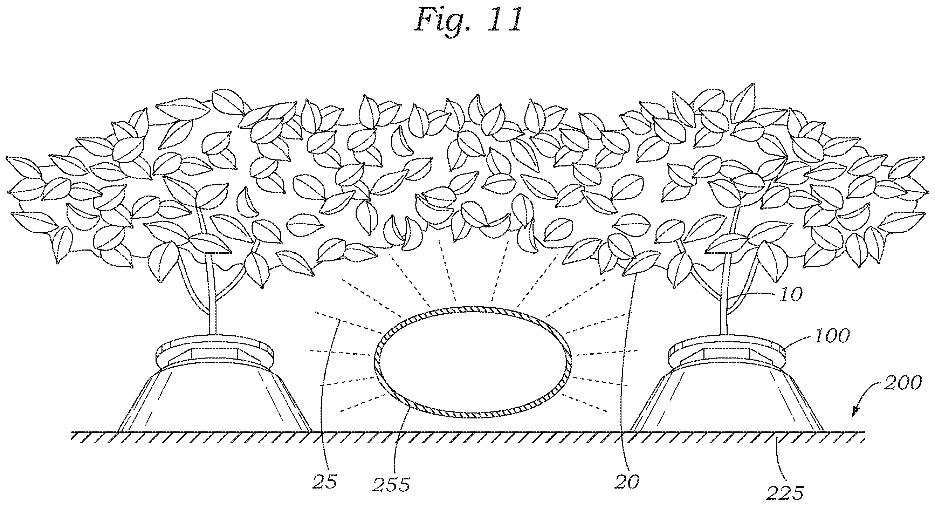

With reference now to Figures 10 and 11, there is shown a plant growing system 200 comprising a growing panel 225 and a porous air hose 255 coupled to the growing panel 225. The growing panel 225 includes a plurality of openings 227 for receiving a plurality of plant receptacles 100. The plurality of openings 227 are arranged in a plurality of parallel lines on the growing panel, and the porous air hose 255 extends along the growing panel 225 between at least two of the parallel lines. In one embodiment, the plurality of parallel lines are rows. In another embodiment, the plurality of parallel lines are columns.

In one embodiment, the porous air hose 255 has a porosity of about 1 to about 5 CFM/ft² at a static pressure of about 0.5 inch water column. In another embodiment, the porous air hose 255 has a porosity of about 1 to about 2 CFM/ft² at a static pressure of about 0.5 inch water column In a further embodiment, the porous air hose 255 has a porosity of about 1.5 to about 2 CFM/ft² at a static pressure of about 0.5 inch water column.

In a one embodiment, the porous air hose 255 allows about 1.5 FPM of airflow at a static pressure of about 0.5 inch water column. In another embodiment, the porous air hose 255 allows about 2 FPM of airflow at a static pressure of about 0.5 inch water column. In a further embodiment, the porous air hose 255 allows about 3 FPM of airflow at a static pressure of about 0.5 inch water column. In an additional embodiment, the porous air hose 255 comprises a polyester fabric. In yet another embodiment, the polyester fabric comprises an active antimicrobial treatment.

In one embodiment, the plant growing system 200 further comprises an air amplifier (not shown) in air communication with the porous air hose 255. In another embodiment, the plant growing system further comprises an air pump (not shown) in air communication with the air amplifier. In a further embodiment, the plant growing system further comprises an air source (not shown) in air communication with the air pump In an additional embodiment, the air source comprises a source of CO₂.

In one embodiment, the plant growing system 200 further comprises a plurality of plant receptacles 100 in the plurality of openings 227. In another embodiment, the plant growing system 200 further comprises a plurality of plants 10 in the plurality of plant receptacles 100. With particular reference to Figure 11, in a further embodiment, the plurality of plants 10 define a plant canopy 20 substantially above the porous air hose 255.

In use, the plant growing system 200 is capable of refreshing the microclimate under a plant canopy 20. When plants 10 are grown in tight proximity to each other an unhealthy microclimate may develop under the plant canopy 20. For example, the tightly packed leaves may shield the area under the plant canopy 20 from moving air and the concentration of CO₂ beneath the canopy may fall below an optimal range. At the same time, moisture from the plant 10 and the horticultural plug or soil may accumulate in the stagnant air to create a damp microclimate that is susceptible to the development of mold or mildew. The porous air hose 255 can pump fresh air 25 under the plant canopy 20 to mitigate moisture development, maintain or restore optimal CO₂ levels, or both. Carbon dioxide enrichment under the plant canopy will increase crop yield and reduce lighting requirements.

With continued reference to Figures 10 and 11, the present invention is also embodied in a method of refreshing a microclimate under a plant canopy 20. The method comprises the steps of arranging a plurality of plant receptacles 100 on a growing panel 225 in a plurality of parallel lines, and coupling a porous air hose 255 to the growing panel 225 so that the porous air hose 255 extends along the growing panel 225 between at least two of the parallel lines. The method further comprises the steps of growing plants 10 in the plurality of plant receptacles 100, wherein the plants 10 define the plant canopy 20 substantially above the porous air hose 255, and pumping a volume of air 25 through the porous air hose 255.

In one embodiment, the at least two parallel vectors are rows. In another embodiment, the at least two parallel vectors are columns. In a further embodiment, the method further comprises the step of amplifying the volume of air 25 that is pumped through the porous air hose 255. In an additional embodiment, the air 25 comprises CO₂.

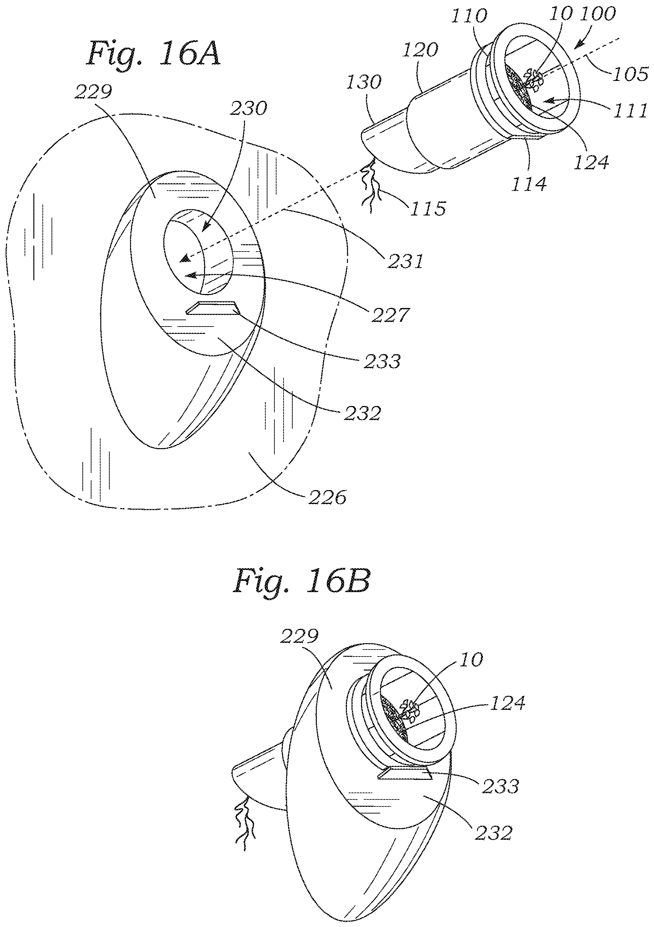

With reference now to Figures 12-18 of the illustrative drawings, there is shown a plant receptacle 100 not according to the invention, for use in automated indoor farming systems. The plant receptacle 100 comprises a gripping collar 110, a receptacle portion 120, and a canopy portion 130. The gripping collar 110 is oriented along an axis 105 and defines an opening 111 for receiving a horticultural plug 124 (Figures 16A and 16B). The horticultural plug 124 may be, for example, a plug described in U.S. Provisional Patent Application No. 62/360,237.

The receptacle portion 120 is connected at a proximal end 121 to the gripping collar 110 and defines a first recess 123 extending along the axis 105 in communication with the opening 111 of the gripping collar 110. The gripping collar 110 is connected to the receptacle portion 120 so that a distal end 112 of the gripping collar forms a first flange 113 about at least a portion of the proximal end 121 of the receptacle portion 120. In another embodiment, not according to the invention, the gripping collar 110 further comprises a second flange 115 and a sidewall 116 extending between and coupled to the first and second flanges 113, 115. In another embodiment, not according to the invention, the sidewall 116 is polygonal.

With continued reference to Figures 12-18, the canopy portion 130 is connected at a proximal end 131 to the receptacle portion 120 and defines a second recess 132 extending along the axis 105 in communication with the first recess 123. The proximal end 131 of the canopy portion 130 has a cross-sectional area that is less than a cross-sectional area of a distal end 122 of the receptacle portion 120. A top section 133 of the canopy portion 130 extends along the axis a greater distance than a bottom section 134 of the canopy portion 130. In an additional embodiment, not according to the invention, the canopy portion 130 defines a hollow truncated cylinder or a hollow truncated prism.

In one embodiment, not according to the invention, the first recess 123 of the receptacle portion 120 is configured to hold the horticultural plug 124, which may be cylindrical or polygonal. In another embodiment, not according to the invention, the difference in cross-sectional areas between the proximal end 131 of the canopy portion 130 and the distal end 122 of the receptacle portion 120 facilitates retaining the horticultural plug 124 within the first recess 123. In a further embodiment, not according to the invention, the distal end 122 of the receptacle portion 120 comprises an annulus 125, which further facilitates retaining the horticultural plug 124 within the first recess 123 of the receptacle portion 120.

With particular reference to Figures 15 and 16A, in one embodiment, not according to the invention, the first flange 113 further comprises a substantially planar edge 114. In a further embodiment, not according to the invention, the top section 133 of the canopy portion 130 is contralateral to the substantially planar edge 114. With particular reference to Figure 12, in a another embodiment, not according to the invention, the plant receptacle 100 further comprises a retaining tongue 126 on the receptacle portion 120. In an additional embodiment, not according to the invention, the retaining tongue 126 is defined by a U-shaped cut 127 through the receptacle portion 120. In yet another embodiment, not according to the invention, the retaining tongue 126 comprises a detent 128.

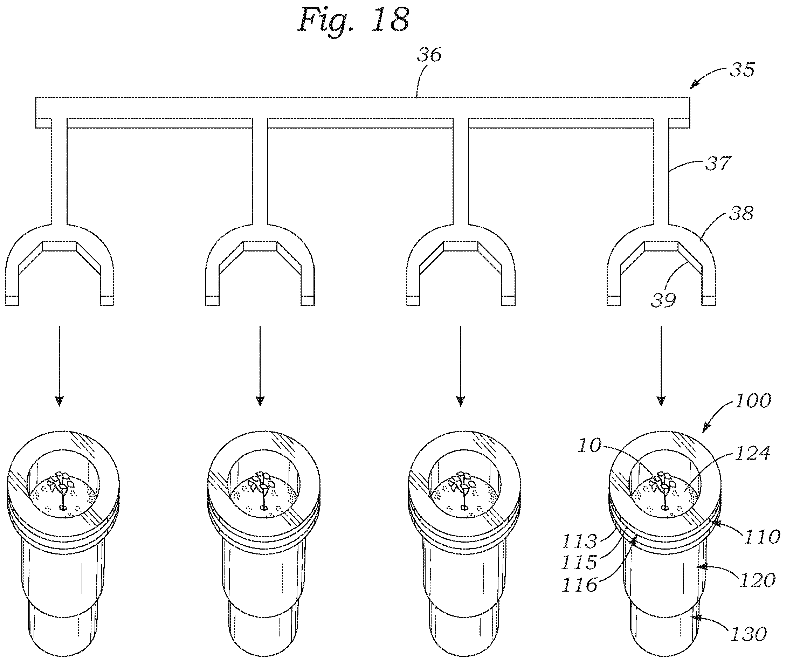

In use, a plant 10 and horticultural plug 124 are held in the first recess 123 of the receptacle portion 120. The plant receptacle's gripping collar 110 facilitates the automated manipulation of the plant receptacle 100 (and plant 10) on the plant growing system 200. For example, with reference to Figure 18, in one embodiment, not according to the invention, an automated multi-tool 35 engages the gripping collar 110 to move the plant receptacle 100 to the plant growing system 200. In one embodiment, not according to the invention, the automated multi-tool 35 comprises a base 36 and a plurality of arms 37 extending from the base 36. Each of the plurality of arms 37 can comprise a grabber 38 configured to engage the gripping collar 110 of the plant receptacle 100. In an additional embodiment, not according to the invention, the grabber 38 comprises a polygonal recess 39 configured to engage the side wall 116 of the gripping collar between the first and second flanges 113, 115. Thus, the automated multi-tool 35 can engage with the gripping collar 110 to transfer the plant receptacle 100, for example, from the nursery system to an opening 227 formed in a plant growing system 200.

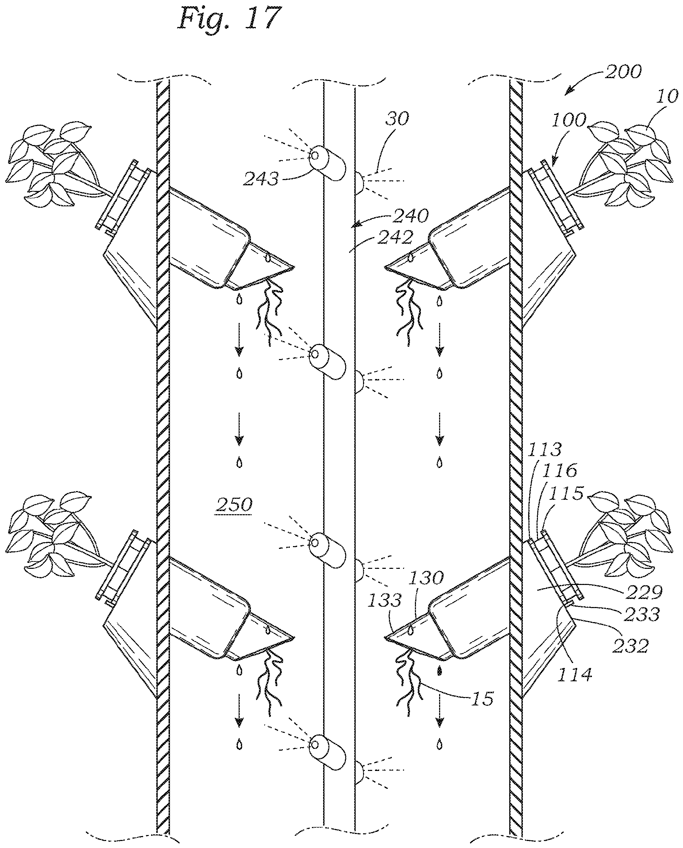

With reference to Figures 16A, 16B, and 17, in one embodiment, not according to the invention, the first flange 113 facilitates retaining the plant receptacle 100 within an opening 227 and forming a seal on the plant growing system 200 so as to maintain a nutrient mist 30 in the enclosure 250 of the plant growing system 200. In another embodiment, not according to the invention, the substantially planar edge 114 of the first flange 113, which is contralateral to the canopy portion's top section 133, facilitates orienting the plant receptacle 100 so that the canopy portion's top section 133 is above the exposed root system 15. For example, in a further embodiment not according to the invention, a bottom portion 232 of the wall receptacle 229 on the plant growing system 200 comprises a substantially planar lip 233, which engages with the substantially planar edge 114 so that the plant receptacle 100 is oriented with the canopy portion's top section 133 above the exposed roots 15. So positioned, the top section 133 of the canopy portion 130 can protect the root 15 of the plant 10 from contact with droplets formed above the root 15.

With continued reference to Figures 12-18 of the illustrative drawings, a method of growing a plant is described. The method not according to the invention, comprises the step of providing a plant receptacle 100 having the plant 10 growing in a horticultural plug 124. With particular reference to Figures 13-16, the plant receptacle 100 comprises a gripping collar 110, a receptacle portion 120, and a canopy portion 130. The gripping collar 110 is oriented along an axis 105 and defines an opening 111 for receiving a horticultural plug 124. The receptacle portion 120 is connected at a proximal end 121 to the gripping collar 110 and defines a first recess 123 extending along the axis 105 in communication with the opening 111 of the gripping collar 110. The receptacle portion 120 is connected to the gripping collar 110 so that a distal end 112 of the gripping collar 110 forms a first flange 113 about at least a portion of the proximal end 121 of the receptacle portion 120. The canopy portion 130 is connected at a proximal end 131 to the receptacle portion 120 and defines a second recess 132 extending along the axis 105 in communication with the first recess 123. The proximal end 131 of the canopy portion 130 has a cross-sectional area that is less than a cross sectional area of a distal end 122 of the receptacle portion 120; and a top section 133 of the canopy portion 130 extends along the axis 105 a greater distance than a bottom section 134 of the canopy portion 130.

With particular reference to Figures 15 and 16A, the first flange 113 of the gripping collar 110 comprises a substantially planar edge 114 that is contralateral to the top section 133 of the canopy portion 130. A root 15 of the plant 10 extends to the second recess 132 of the plant receptacle's 100 canopy portion 130.

The method not according to the invention, further comprises the step of placing the plant receptacle 100 into an opening 227 on a growing wall 226 such that the canopy portion 130 of the plant receptacle 100 extends into an enclosure 250 within the growing wall 226. The opening 227 on the growing wall 226 is surrounded by a wall receptacle 229 having its own opening 230. The opening 230 of the wall receptacle 229 defines an axis 231 that is oblique to the growing wall 226. The wall receptacle 229 further comprises a bottom portion 232 having a substantially planar lip 233.

The method not according to the invention, further comprises the step of orienting the plant receptacle 100 on the growing wall 226 so that the substantially planar edge 114 on the plant receptacle 100 engages the substantially planar lip 233 on the bottom portion 232 of the wall receptacle 229. So positioned, the top section 133 of the canopy portion 130 will extend above the root 15 of the plant 10.

With particular reference to Figure 17, in one embodiment, the method not according to the invention, further comprises the step of spraying a mist 30 within the enclosure 250. In another embodiment, the top section 133 of the canopy portion 130 protects the root 15 of the plant 10 from contact with droplets formed above the root 15.

With reference to Figure 18, in one embodiment, not according to the invention, the steps of placing the plant receptacle 100 into an opening 227 on a growing wall 226 and orienting the plant receptacle 100 on the growing wall 226 are performed by an automated multi-tool 35, such as the multi-tool 35 described above. In another embodiment, not according to the invention, the automated multi-tool 35 can engage the side wall 116 of the gripping collar 110 between the first and second flanges 113, 115 on a plurality of plant receptacles 100 and simultaneously position the plurality of receptacles 100 on a plant growing system 200.

The plant growing systems 200 and plant receptacles 100 can be used with an indoor farming system as described in U.S. Provisional Application No. 62/259,002. In one embodiment, not according to the invention, the indoor farming system can include a nursery rack. In another embodiment, not according to the invention, the nursery rack can comprise sliding shelves configured to hold plant receptacles 100. In a further embodiment, not according to the invention, the nursery rack can comprise a light source suspended from the shelves. The light source can be LED, fluorescent, or any other light source suitable for growing plants. In an additional embodiment, not according to the invention, the nursery rack can comprise a feed tank with piping. In yet another embodiment, the nursery rack can comprise coasters to allow the nursery rack to be easily moved. In one additional embodiment, not according to the invention, the nursery rack can comprise a controller.

In one embodiment, not according to the invention, the indoor farming system can include a growing container. In another embodiment, not according to the invention, the growing container can comprise upper tracks for sliding the plant growing systems 200 into and out of the growing container for harvesting and servicing. In a further embodiment, not according to the invention, the growing container can comprise break-away upper and lower panels to permit insertion and removal of the plant growing systems 200. In an additional embodiment, not according to the invention, the growing container can comprise one or more or a combination of the following; inlet sprayer pumps, catch basin pumps, sub-assembly plates for the inlet and catch basin pumps, climate control ducting, and insulation ducting.

In one embodiment, not according to the invention, the indoor farming system includes a lighting assembly (not shown). In another embodiment, the lighting assembly can comprise a motorized track to move the lighting assembly with respect to the plant growing system 200. In a further embodiment, not according to the invention, the lighting assembly can comprise a clear clam-shell casing with a diffuser coating that permits airflow over fluorescent or LED lamps, or another suitable light source. In an additional embodiment, not according to the invention, the lighting assembly can comprise an airflow ducting system to cool the light source and facilitate temperature control within the growing container. In yet another embodiment, the lighting assembly can comprise a cooling fan for the airflow ducting system. In one additional embodiment, not according to the invention, the lighting assembly can comprise a suspension system for suspending lamps from the motorized track. In another embodiment, the lighting system can comprise an upper track to facilitate movement of the lighting assembly throughout the indoor farming system.

In one embodiment, not according to the invention, the indoor farming system can include a control system. In another embodiment, not according to the invention, the control system can comprise one or more or a combination of the following: nutrient control, ozone generation, water filtration, water supply, carbon dioxide control, supplemental plant life support, automated cleaning, a motorized track, automated seeding, and air conditioning.

It should be appreciated from the foregoing description provides a scalable and automatable indoor farming system, including a plant growing system and a plant receptacle. The plant growing system is easily constructed, includes component parts that can be effortlessly removed for maintenance and cleaning, and provides a healthier and more efficient growing environment. The plant receptacle facilitates the automated relocation of plants throughout the indoor farming system and provides a protected environment for the plant's roots. For all of these reasons, the systems and methods described herein are ideal for use with automated indoor farming systems.

Specific methods, devices, and materials are described, although any methods and materials similar or equivalent to those described can be used in the practice or testing of the present embodiment according to the attached claims. Unless defined otherwise, all technical and scientific terms used herein have the same meanings as commonly understood by one of ordinary skill in the art to which this embodiment belongs. As used herein, singular words such as "a" and "an" mean "one or more" unless clear intent is shown to limit the element to "one." The term "about" means ±2% of the value it modifies.

Without further elaboration, it is believed that one skilled in the art, using the proceeding description, can make and use the present invention to the fullest extent. The invention has been described in detail with reference only to the presently preferred embodiments. Persons skilled in the art will appreciate that various modifications can be made without departing from the invention. Accordingly, the invention is defined only by the following claims.

## Claims

1. A plant growing system (200) comprising:
a roller assembly (210) for rolling engagement with an upper track (205) ;
a support member (215) coupled to the roller assembly (210), the support member (215) having a first side (216) in which an indentation (217) is formed, and a second side (219) opposite the first side (2016);
a first growing panel (225) suspended from the first side (216) of the support member (215);
a second growing panel (236) suspended from the second side (219) of the support member (215); and
a supply tube (240) supported by the support member (215);
wherein each of the first growing panel (225) and the second growing panel (236) comprises:
a growing wall (236) having a plurality of openings (227) for receiving a plurality of plant receptacles: (100); and
a sidewall (234) extending about at least a portion of a periphery (228) of the growing wall; (226)
wherein the sidewall (234) of the first growing panel; (225) and the sidewall of the second growing panel (219) abut each other to define an enclosure (250) between the growing wall (226) of the first growing panel; (225) and the growing wall (226) of the second growing panel; (236) and
wherein the supply tube (240) comprises:
a connection tube (241) extending along an upper face (220) of the support member (215), and
a vertical tube, (242) coupled to the connection tube (241), the vertical tube (242) extending through the indentation (217) formed in the first side (216) of the support member (215) into the enclosure (250).

2. The plant growing system of claim 1, wherein the first side of the support member further comprises a flange.

3. The plant growing system of claim 1, wherein the support member extends substantially across a depth of the enclosure.

4. The plant growing system of claim 1, wherein the vertical tube comprises a spray nozzle.

5. The plant growing system of claim 4, wherein a lower portion of the growing wall of at least one of the first growing panel and the second growing panel further comprises a supply tube opening, wherein the vertical tube is removably coupled to the supply tube opening.

6. The plant growing system of claim 5, wherein the supply tube comprises three vertical tubes comprising: a first input tube, a second input tube, and an output tube.

7. The plant growing system of claim 6, wherein three indentations are formed on the first side of the support member, the three indentations comprising a first indentation, a second indentation, and a third indentation; wherein the first input tube extends through the first indentation, the output tube extends through the second indentation, and the second input tube extends through the third indentation.

8. The plant growing system of claim 7, wherein the lower portion of the growing wall of at least the first growing panel and the second growing panel comprises three supply tube openings, the three supply tube openings comprising: a first supply tube opening removably coupled to the first input tube, a second supply tube opening removably coupled to the second input tube, and a third supply tube opening removably coupled to the output tube.

9. The plant growing system of claim 8, wherein the supply tube Is m fluid communication with a water supply outside the enclosure.

10. The plant growing system of claim 1, wherein each of the plurality of openings on the growing wall is surrounded by a wall receptacle having its own opening, wherein the opening of the wall receptacle defines an axis that is oblique to the growing wall.

11. The plant growing system of claim 10, wherein the wall receptacle further comprises a bottom portion having a substantially planar lip.

12. The plant growing system of claim 1 wherein each of the plurality of plant receptacles comprises:
a gripping collar oriented along an axis and defining an opening for receiving a horticultural plug;
a receptacle portion connected at a proximal end to the gripping collar and defining a first recess extending along the axis in communication with the opening of the gripping collar,
wherein the receptacle portion is connected to the gripping collar so that a distal end of the gripping collar forms a first flange about at least a portion of the proximal end of the receptacle portion; and
a canopy portion connected at a proximal end to the receptacle portion and defining a second recess extending along the axis in communication with the first recess,
wherein the proximal end of the canopy portion has a cross-sectional area that is less than a cross sectional area of a distal end of the receptacle portion; and
wherein a top section of the canopy portion extends along the axis a greater distance than a bottom section of the canopy portion.

13. The plant growing system of claim 1 further comprising a porous air hose coupled to the first growing panel or the second growing panel.

## Patentansprüche

1. Pflanzenzuchtsystem (200), umfassend:
eine Rolleneinheit (210) für einen rollenden Eingriff mit einer oberen Schiene (205);
ein mit der Rolleneinheit (210) gekoppeltes Trägerelement (215), wobei das Trägerelement (215) eine erste Seite (216) aufweist, in der eine Vertiefung (217) ausgebildet ist, und eine zweite Seite (219) entgegengesetzt zu der ersten Seite (2016);
eine erste Zuchtplatte (225), die an der ersten Seite (216) des Trägerelements (215) aufgehängt ist;
eine zweite Zuchtplatte (236), die an der zweiten Seite (219) des Trägerelements (215) aufgehängt ist; und
ein Versorgungsrohr (240), das von dem Trägerelement (215) getragen wird;
wobei die erste Zuchtplatte (225) und die zweite Zuchtplatte (236) jeweils folgendes umfassen:
eine Zuchtwand (236) mit einer Mehrzahl von Öffnungen (227) zur Aufnahme einer Mehrzahl von Pflanzenbehältnissen (100); und
eine Seitenwand (234), die sich um wenigstens einen Teil einer Peripherie (228) der Zuchtwand (226) erstreckt;
wobei die Seitenwand (234) der ersten Zuchtplatte (225) und die Seitenwand der zweiten Zuchtplatte (219) aneinander anstoßen, so dass sie zwischen der Zuchtwand (226) der ersten Zuchtplatte (225) und der Zuchtwand (226) der zweiten Zuchtplatte (236) eine Einfassung (250) definieren; und
wobei das Versorgungsrohr (240) folgendes umfasst:
ein Verbindungsrohr (241), das sich entlang einer Oberseite (220) des Trägerelements (215) erstreckt; und
ein vertikales Rohr (242), das mit dem Verbindungsrohr (241) verbunden ist, wobei sich das vertikale Rohr (242) durch die in der ersten Seite (216) des Trägerelements (215) ausgebildete Vertiefung (217) in die Einfassung (250) erstreckt.

2. Pflanzenzuchtsystem nach Anspruch 1, wobei die erste Seite des Trägerelements ferner einen Flansch umfasst.

3. Pflanzenzuchtsystem nach Anspruch 1, wobei sich das Trägerelement im Wesentlichen über eine Tiefe der Einfassung erstreckt.

4. Pflanzenzuchtsystem nach Anspruch 1, wobei das vertikale Rohr eine Sprühdüse umfasst.

5. Pflanzenzuchtsystem nach Anspruch 4, wobei ein unterer Teil der Zuchtwand mindestens der ersten Zuchtwand und/oder der zweiten Zuchtwand ferner eine Versorgungsrohröffnung umfasst, wobei das vertikale Rohr entfernbar mit der Versorgungsrohröffnung gekoppelt ist.

6. Pflanzenzuchtsystem nach Anspruch 5, wobei das Versorgungsrohr drei vertikale Rohre umfasst: ein erstes Einlassrohr, ein zweites Einlassrohr und ein Auslassrohr.

7. Pflanzenzuchtsystem nach Anspruch 6, wobei drei Vertiefungen auf der ersten Seite des Trägerelements ausgebildet sind, wobei die drei Vertiefungen eine erste Vertiefung, eine zweite Vertiefung und eine dritte Vertiefung umfassen; wobei sich das erste Einlassrohr durch die erste Vertiefung erstreckt, wobei sich das Auslassrohr durch die zweite Vertiefung erstreckt, und wobei sich das zweite Einlassrohr durch die dritte Vertiefung erstreckt.

8. Pflanzenzuchtsystem nach Anspruch 7, wobei der untere Teil der Zuchtwand mindestens der ersten Zuchtplatte und/oder der zweiten Zuchtplatte drei Versorgungsrohröffnungen umfasst, wobei die drei Versorgungsrohröffnungen folgendes umfassen: eine erste Versorgungsrohröffnung, die mit dem ersten Einlassrohr entfernbar gekoppelt ist, eine zweite Versorgungsrohröffnung, die mit dem zweiten Einlassrohr entfernbar gekoppelt ist, und eine dritte Versorgungsrohröffnung, die entfernbar mit dem Auslassrohr gekoppelt ist.

9. Pflanzenzuchtsystem nach Anspruch 8, wobei sich das Versorgungsrohr in Fluidkommunikation mit einer Wasserversorgung außerhalb der Einfassung befindet.

10. Pflanzenzuchtsystem nach Anspruch 1, wobei jede Öffnung der Mehrzahl von Öffnungen an der Zuchtwand von einem Wandbehältnis mit einer eigenen Öffnung umgeben ist, wobei die Öffnung des Wandbehältnisses eine Achse definiert, die schräg zu der Zuchtwand ist.

11. Pflanzenzuchtsystem nach Anspruch 10, wobei das Wandbehältnis ferner einen unteren Teil mit einer im Wesentlichen planaren Lippe umfasst.

12. Pflanzenzuchtsystem nach Anspruch 1, wobei jedes der Mehrzahl von Pflanzenbehältnissen folgendes umfasst:
einen Greifkragen, der entlang einer Achse ausgerichtet ist und eine Öffnung zur Aufnahme einer Gartenbaupflanze definiert;
einen Aufnahmeteil, der an einem proximalen Ende mit dem Greifkragen verbunden ist und eine erste Aussparung definiert, die sich entlang der Achse in Kommunikation mit der Öffnung des Greifkragens erstreckt;
wobei der Aufnahmeteil mit dem Greifkragen verbunden ist, so dass ein distales Ende des Greifkragens einen ersten Flansch um mindestens einen Teil des proximalen Endes des Aufnahmeteils bildet; und
einen Baldachinteil, der an einem proximalen Ende mit dem Aufnahmeteil verbunden ist und eine zweite Aussparung definiert, die sich entlang der Achse in Kommunikation mit der ersten Aussparung erstreckt;
wobei das proximale Ende des Baldachinteils eine Querschnittsfläche aufweist, die kleiner ist als eine Querschnittsfläche eines distalen Endes des Aufnahmeteils; und
wobei sich ein oberer Abschnitt des Baldachinteils entlang der Achse um eine größere Strecke erstreckt als ein unterer Abschnitt des Baldachinteils.

13. Pflanzenzuchtsystem nach Anspruch 1, das ferner einen porösen Luftschlauch umfasst, der mit der ersten Zuchtplatte oder der zweiten Zuchtplatte gekoppelt ist.

## Revendications

1. Système de culture de plante (200) comprenant :
un ensemble rouleau (210) pour une entrée en prise roulante avec une voie supérieure (205) ;
un élément support (215) couplé à l'ensemble rouleau (210), l'élément support (215) ayant un premier côté (216) dans lequel une indentation (217) est formée, et un deuxième côté (219) opposé au premier côté (2016) ;
un premier panneau de culture (225) suspendu à partir du premier côté (216) de l'élément support (215) ;
un deuxième panneau de culture (236) suspendu à partir du deuxième côté (219) de l'élément support (215) ; et
un tube d'alimentation (240) supporté par l'élément support (215) ;
le premier panneau de culture (225) et le deuxième panneau de culture (236) comprenant chacun :
une paroi de culture (236) ayant une pluralité d'ouvertures (227) pour recevoir une pluralité de réceptacles de plante (100) ; et
une paroi latérale (234) s'étendant autour d'au moins une portion d'une périphérie (228) de la paroi de culture (226) ;
la paroi latérale (234) du premier panneau de culture (225) et la paroi latérale du deuxième panneau de culture (219) étant en butée l'une contre l'autre pour définir une enceinte (250) entre la paroi de culture (226) du premier panneau de culture (225) et la paroi de culture (226) du deuxième panneau de culture (236) ; et
le tube d'alimentation (240) comprenant :
un tube de connexion (241) s'étendant le long d'une face supérieure (220) de l'élément support (215), et
un tube vertical (242) couplé au tube de connexion (241), le tube vertical (242) s'étendant au travers de l'indentation (217) formée dans le premier côté (216) de l'élément support (215) dans l'enceinte (250).

2. Système de culture de plantes de la revendication 1, dans lequel le premier côté de l'élément support comprend en outre une bride.

3. Système de culture de plantes de la revendication 1, dans lequel l'élément support s'étend essentiellement au travers d'une profondeur de l'enceinte.

4. Système de culture de plantes de la revendication 1, dans lequel le tube vertical comprend une buse de pulvérisation.

5. Système de culture de plantes de la revendication 4, dans lequel une portion inférieure de la paroi de culture d'au moins un panneau parmi le premier panneau de culture et le deuxième panneau de culture comprend en outre une ouverture de tube d'alimentation, le tube vertical étant couplé de manière amovible à l'ouverture de tube d'alimentation.

6. Système de culture de plantes de la revendication 5, dans lequel le tube d'alimentation comprend trois tubes verticaux comprenant : un premier tube d'entrée, un deuxième tube d'entrée et un tube de sortie.

7. Système de culture de plantes de la revendication 6, dans lequel trois indentations sont formées sur le premier côté de l'élément support, les trois indentations comprenant une première indentation, une deuxième indentation et une troisième indentation ; le premier tube d'entrée s'étendant au travers de la première indentation, le tube de sortie s'étendant au travers de la deuxième indentation et le deuxième tube d'entrée s'étendant au travers de la troisième indentation.

8. Système de culture de plantes de la revendication 7, dans lequel la portion inférieure de la paroi de culture d'au moins un panneau parmi le premier panneau de culture et le deuxième panneau de culture comprend trois ouvertures de tube d'alimentation, les trois ouvertures de tube d'alimentation comprenant : une première ouverture de tube d'alimentation couplée de manière amovible au premier tube d'entrée, une deuxième ouverture de tube d'alimentation couplée de manière amovible au deuxième tube d'entrée, et une troisième ouverture de tube d'alimentation couplée de manière amovible au tube de sortie.

9. Système de culture de plantes de la revendication 8, dans lequel le tube d'alimentation est en communication fluidique avec une alimentation d'eau à l'extérieur de l'enceinte.

10. Système de culture de plantes de la revendication 1, dans lequel chaque ouverture parmi la pluralité d'ouvertures sur la paroi de culture est entourée par un réceptacle de paroi ayant sa propre ouverture, l'ouverture du réceptacle de paroi définissant un axe qui est oblique à la paroi de culture.

11. Système de culture de plantes de la revendication 10, dans lequel le réceptacle de paroi comprend en outre une portion de fond ayant une lèvre essentiellement planaire.

12. Système de culture de plantes de la revendication 1, dans lequel chaque réceptacle de plante parmi la pluralité de réceptacles de plante comprend :
un col de préhension orienté le long d'un axe et définissant une ouverture pour recevoir un bouchon horticole ;
une portion de réceptacle connectée au niveau d'une extrémité proximale au col de préhension et définissant un premier retrait s'étendant le long de l'axe en communication avec l'ouverture du col de préhension,
la portion de réceptacle étant connectée au col de préhension de telle sorte qu'une extrémité distale du col de préhension forme une première bride autour d'au moins une portion de l'extrémité proximale de la portion de réceptacle ; et
une portion d'auvent connectée au niveau d'une extrémité proximale à la portion de réceptacle et définissant un deuxième retrait s'étendant le long de l'axe en communication avec le premier retrait,
l'extrémité proximale de la portion d'auvent ayant une aire de section transversale qui est inférieure à une aire de section transversale d'une extrémité distale de la portion de réceptacle ; et
une section de haut de la portion d'auvent s'étendant le long de l'axe sur une plus grande distance qu'une section de fond de la portion d'auvent.

13. Système de culture de plantes de la revendication 1, comprenant en outre un tuyau d'air poreux couplé au premier panneau de culture ou au deuxième panneau de culture.
